(19) Europäisches Patentamt

European Patent Office

Office européen des brevets

(11) Publication number: **0 322 079**

**A1**

# EUROPEAN PATENT APPLICATION

(21) Application number: 88202970.5

(22) Date of filing: 19.12.88

(51) Int. Cl.⁴: **B23F 21/04 , B24B 3/34 , //B23F5/12**

(30) Priority: 22.12.87 NL 8703103

(43) Date of publication of application:
28.06.89 Bulletin 89/26

(84) Designated Contracting States:
AT BE CH DE ES FR GB GR IT LI LU NL SE

(71) Applicant: HANKAMP B.V.
Buurserstraat 198
NL-7544 RG Enschede(NL)

(72) Inventor: Seroo, Jan Mathijs
Achelsedijk 6
B-3598 Bocholt(BE)
Inventor: Cuypers, Martinus Hubertus
Penelopestraat 219
NL-5631 CM Eindhoven(NL)
Inventor: Oude Maatman, Anthonius
Johannes Hendrikus Maria
Pastoor Plegtstraat 10
NL-7573 GH Oldenzaal(NL)

(74) Representative: Reynvaan, Lambertus
Johannes, Ir. et al
EXTERPATENT B.V. P.O. Box 90649
NL-2509 LP 's-Gravenhage(NL)

(54) **Tool for cutting gear wheels, and a method for resharpening said tool after wear.**

(57) A tool for cutting gears and a method for resharpening said tool after wear, said tool comprising a holder (1) to which two or more thin cutting plates (5, 7, 9) are attached in a detachable fashion. Seen in the direction of cutting said cutting plates having gradually decreasing radial dimensions in such a way that during cutting the front cutting plate which has the smallest dimensions comes into contact first with the gear to be cutted. In order to resharpe said tool all cutting plates are detached from the holder, the cutting plates are sharpened by grinding down the transverse face (12) at the cuttinig edge side, a new, fresh cutting plate (5) is fitted on the holder and the ground cutting plates, with the exception of the original front cutting plate (9), are refitted in the same order as viewed in the direction of cutting before the new cutting plate on the holder.

_FIG.1._

## Tool for cutting gear wheels, and a method for resharpening said tool after wear.

The present invention relates to a tool for cutting gears according to the generating principle, comprising a holder to which a thin cutting plate provided with a toothing system is attached in detachable fashion.

For the manufacture of gears it is known to use a cutting tool which can consist of a gear cutter or a rack cutter and is provided with a toothing system having a clearance angle and a rake angle. For the manufacture of cylindrical gears, such a known cutting tool can be resharpened only to a limited extent, since grinding of said tool results in a decrease in the dimensions. Once the dimensions of the cutting tool go outside the admissible tolerances, the cutting tool must be replaced. The generally expensive cutting tool thus has a very limited service life.

From EP-A-0 132 350 a cutting tool is known comprising a supporting body and a clamping plate between which a thin cutting plate is clamped. When this thin cutting plate has become dull it is replaced by a new one. The cutting plate in said cutting tool is used once and is not resharpened.

The object of the present invention is to improve this known cutting tool in such a way that the total service life is considerably extended, which leads to a cheaper and more efficient manufacturing process.

This object is achieved according to the invention in that two or more cutting plates are fixed one after the other on the holder in the direction of cutting, said cutting plates having gradually decreasing dimensions in the direction of cutting, in such a way that during the cutting the front cutting plate, which has the smallest dimensions, comes into contact first with the gear to be cutted.

The front cutting plates are in fact used to rough the workpiece. Here the first cutting plate will make a relatively deep cut, and the following cutting plates will each make a relatively light cut. The last cutting plate which comes into contact with the workpiece, will also make a relatively light cut, said last cutting plat acting as a finishing cutting plate, and determining the final dimensions of the gear to be cut. Each of the cutting plates is thus subjected to only a slight load, with the result that the service life of the cutting plates increases. It will be clear that the shape and relative position of the cutting plates preceding the last cutting plate does not determine the quality of the gear to be cut, since any deviations and inaccuracies are corrected by the last cutting plate. A major advantage is also that both roughing and finishing of the workpiece take place in a single cutting movement.

It is preferable according to the invention for a spacer, which is also provided with a toothing system, to be fitted between every two successive cutting plates.

In order to create some space for the removal of the cuttings, it is desirable for the cutting plates to be spaced apart in the axial direction. Providing said spacers with a toothing system corresponding to that of the cutting plates ensures a good support for the cutting plates.

The spacers are preferably one or more cutting plates which have been ground to smaller dimensions.

Using these old cutting plates as spacers, after further grinding down if necessary, ensures a cheap construction of the cutting tool. On account of the toothing of the old cutting plates, a good support of the cutting teeth of the operational cutting plates is obtained.

The present invention is also embodied in a method for resharpening said tool after wear, said method being distinguished by the fact that all cutting plates are detached from the holder, the cutting plates are sharpened by grinding down the transverse face at the cutting edge side, a new, fresh cutting plate is fitted on the holder, and the ground cutting plates, with the exception of the original, front cutting plate, are refitted on the holder in the same order before the new cutting plate as viewed in the direction of cutting.

The dimensions of the cutting plates will decrease with each grinding operation due to the clearance angle present. Due to the fact that after each resharpening operation the cutting plates are thus moved forward one position, the dimensions of the cutting plates thus gradually decrease in the forward (cutting) direction. It is thus sufficient to have one standard cutting plate which, after being used as a finishing cutting plate, is ground and can then be used a number of times again as a roughing plate. The total service life of each cutting plate is thus increased a number of times depending on the number of cutting plates on the holder.

It will be clear that the cutting tool according to the invention is particularly suitable for mass production of gears. Due to the low cutting forces per cutting plate, the wear on the individual cutting plates is minimal, so that the cutting tool can operate for a long time without resharpening, which makes the production much cheaper and more efficient.

The invention will be explained in greater detail with reference to the drawing, in which:

Fig. 1 shows a schematic cross section of the cutting tool according to the invention;

Fig. 2 shows on an enlarged scale a partial cross section of a new, fresh cutting plate which can be used with the tool according to Fig 2; and

Fig. 3 shows schematically on a larger scale a detail of the cutting tool according to Fig. 1.

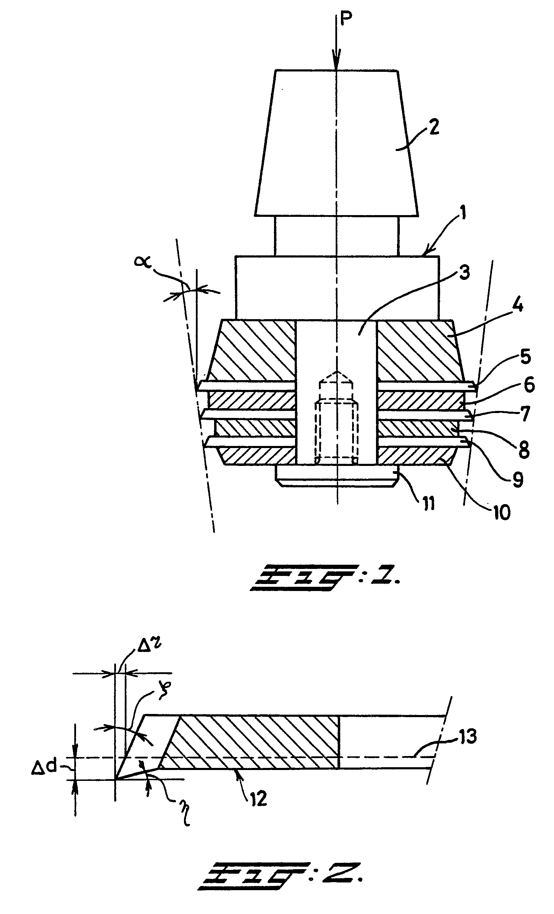

The cutting tool shown in Fig. 1 comprises a holder 1, having a cone 2 to fix the tool in a conventional gear cutter machine, and a mandrel 3. The mandrel has fitted on it in succession an annular supporting plate 4, a first cutting plate 5, a spacer 6, a second cutting plate 7, a spacer 8, a third cutting plate 9, and a clamping plate 10, said parts being fixed on the mandrel by means of a bolt 11. The parts 4 to 10 have a fixed orientation relative to each other, for example by means of a key (not shown in the drawing) fitted in the mandrel. As can be seen clearly in Fig. 1, the cutting plates 5, 7 and 9 have decreasing external diameters in the direction of cutting (arrow P), so that the envelope of these three cutting plates forms a tapered surface having a conical angle of $2 \cdot \alpha$

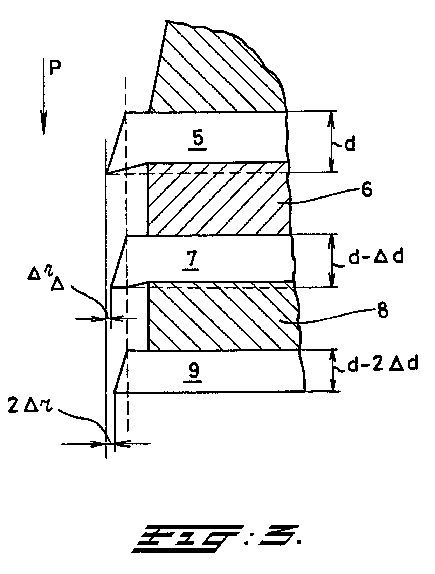

The cutting plates 5, 7 and 9 have a toothing system which corresponds to the toothing system of the gear to be produced. As Fig. 2 shows, the toothing of the cutting plates has a clearance angle $\xi$ and a rake angle $\eta$. Such a cutting plate can be sharpened by grinding down the transverse face 12 at the cutting edge side, for example up to the dotted line 13, during which the thickness of the cutting plate decreases by $\Delta$ d. As a result of the clearance angle $\xi$, the radial dimension of the cutting plate will decrease over $\Delta$ r.

Since grinding of the cutting plates in the transverse face 12 at the cutting edge side thus each time results in a decrease in the size of the cutting plates, the tool according to the invention can be made up with cutting plates which are reground one or more times. It will be noticed here that the cutting plate is ground flat and the rake angle $\eta$ has disappeared after grinding. The cutting properties of the cutting plate consequently decrease after the grinding. This is, however, not a disadvantage, since the cutting plate works as a rough-machining cutting plate after grinding.

Fig. 3 shows how a cutting tool according to the invention can be assembled. In this figure the top cutting plate 5 is a new cutting plate which has never been ground and has a thickness d. The following cutting plate 7 has been ground once and has a thickness d-$\Delta$ d, the radial dimension of the cutting plate 7 having decreased by $\Delta$ r. The (front) cutting plate 9 following this has been ground twice and consequently has a thickness d - 2.$\Delta$ d, the radial dimension having decreased by 2.$\Delta$ r.

The gradually decreasing dimensions of the cutting plates are thus obtained in a simple manner by grinding each plate, at each resharpening operation the cutting plates moving up one place on the mandrel in the cutting direction P. For the last cutting plate 5 a new cutting plate which has never been ground before is used, so that said cutting plate always has the accurate dimensions which are necessary for cutting a cylindrical gear or crown wheel of the desired high quality. The cutting plates ground one or more times which are provided for this serve as roughing plates. The result of this is that the last cutting plate 5 is used only for accurate finishing, and is not exposed to great cutting forces. The service life of this last cutting plate is thereby considerably extended.

The spacers 6 and 8 are also provided with a toothing system, in order also to provide optimum support for the cutting teeth of the cutting plates. Cutting plates which are wast material from the tool being made functional again could be used as spacers. The spacers can be obtained cheaply in this way, while the good correspondence in the toothing of these spacers obtained in this way ensures good support of the cutting teeth. Several of these waste cutting plates above one another could, if desired, be used as a spacer, and the cutting plates could be ground down further for this purpose.

It will be clear that the invention is not restricted to the embodiment described here, but that many variations are possible within the scope of the invention. For example, the number of cutting plates fitted on the holder can be varied as desired. Moreover, the cutting tool can be designed as a rack rather than in the form of the shown gear cutter, in which case the holder 1 then has to be adapted accordingly.

## Claims

1. A tool for cutting gears according to the generating principle, comprising a holder (1) to which a thin cutting plate (5, 7, 9) provided with a toothing system is attached in detachable fashion, **characterized in that** two or more cutting plates (5, 7, 9) are fixed on the holder (1) one after the other in the directioin of cutting, said cutting plates having gradually decreasing dimensions in the direction of cutting, in such a way that during the cutting the front cutting plate, which has the smallest dimensions, comes into contact first with the gear to be cutted.

2. A tool according to claim 1, **characterized in that** a spacer (6, 8) also provided with a toothing system is disposed between each two successive cutting plates.

3. A tool according to Claim 2, **characterized in that** the spacers consist of one or more cutting plates ground to smaller dimensions.

4. A method for resharpening said tool according to the Claims 1, 2 or 3 after wear, **characterized in that** all cutting plates are detached from the holder, the cutting plates are sharpened by grinding down the transverse face (12) at the cutting edge side, a new, fresh cutting plate (5) is fitted on the holder, and the ground cutting plates, with the exception of the original, front cutting plate (9), are refitted in the same order as viewed in the direction of cutting before the new cutting plate on the holder.

5. A method according to Claim 4, **characterized in that** the cutting plates are ground flat in the transverse face (12) at the cutting edge side.

Fig. 1.

Fig. 2.

$$FIG:3.$$

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | CH-A- 481 711 (F. WAIBEL) <br> * Column 1, lines 28-38; column 2, lines 1-25 * <br> --- | 1-3 | B 23 F 21/04 <br> B 24 B 3/34 // <br> B 23 F 5/12 |
| A | DE-A-2 304 136 (THE LAPOINTE MACHINE TOOL CO., LTD) <br> * Page 4, lines 16-19; figures 1,5,6 * <br> --- | 2 | |
| A | SU-A- 183 024 (A.M. MELLER) <br> * Whole document * <br> --- | 2,3 | |
| Y | FR-A-1 552 663 (FIRMA KARL KLINK WERKZEUG- UND MASCHINENFABRIK) <br> * Page 2, left-hand column, lines 23-33; figure 1 * <br> --- | 4,5 | |
| Y | D.W. DUDLEY: "Handbook of practical gear design", 1984, pages 6.2,6.7,6.11, McGraw-Hill, New York, US <br> * Page 6.11, figures 6.7, including text * <br> --- | 4,5 | TECHNICAL FIELDS SEARCHED (Int. Cl.4) |
| A | US-A-4 629 377 (E. TLAKER et al.) <br> * Whole document * <br> --- | 1 | B 23 F <br> B 23 D |
| A | EP-A-0 132 350 (BARBER-COLMAN CO.) <br> * Whole document * <br> ----- | 1 | |

The present search report has been drawn up for all claims

| Place of search | Date of completion of the search | Examiner |
|---|---|---|
| THE HAGUE | 23-03-1989 | MOET H.J.K. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                              
& : member of the same patent family, corresponding document

EPO FORM 1503 03.82 (P0401)